# EUROPÄISCHE PATENTANMELDUNG

(11) **EP 1 764 896 A2**
(43) Veröffentlichungstag der Anmeldung: **21.03.2007**
(21) Anmeldenummer: 06120085.3
(22) Anmeldetag: 05.09.2006
(51) Int. Cl.: H02J 7/14

(54) **Schaltungssystem zur Erzeugung einer gegenüber einer Spannung eines Bordnetzes eines Kraftfahrzeugs erhöhten Versorgungsspannung**

(30) Priorität: 06.09.2005 DE 102005042154
(71) Anmelder: ZF-Lenksysteme GmbH, 73527 Schwäbisch Gmünd (DE)
(72) Erfinder: Leutner, Wilfried, 73527, Schwäbisch Gmünd (DE); Pötzl, Thomas, 71364, Winnenden (DE)

(57) **Zusammenfassung**

Die Erfindung betrifft ein Schaltungssystem (16) zur Erzeugung einer gegenüber einer Spannung eines Bordnetzes eines Kraftfahrzeugs erhöhten Versorgungsspannung aus dem Bordnetz für wenigstens einen elektrischen Verbraucher. Zu einem Speicher (20) des Bordnetzes ist ein zusätzlicher elektrischer Energiespeicher (19) in Reihe geschaltet ist, welcher über eine Ladeschaltung (22) aufladbar ist. Der wenigstens eine elektrische Verbraucher wird durch die Reihenschaltung aus dem Speicher (20) des Bordnetzes und dem zusätzlichen elektrischen Energiespeicher (19) versorgt.

## Beschreibung

Schaltungssystem zur Erzeugung einer gegenüber einer Spannung eines Bordnetzes eines Kraftfahrzeugs erhöhten Versorgungsspannung

Die Erfindung betrifft ein Schaltungssystem zur Erzeugung einer gegenüber einer Spannung eines Bordnetzes eines Kraftfahrzeugs erhöhten Versorgungsspannung für wenigstens einen elektrischen Verbraucher.

In heutige Kraftfahrzeugen werden in der Regel alle elektrischen Verbraucher aus einem konventionellen 12 Volt-Bordnetz gespeist. Dieses weist im Wesentlichen einen mit dem Motor verbundenen Generator, eine Batterie zur Pufferung und mehrere Verbraucher auf.

Dieses Bordnetz ist in seiner Leistung begrenzt. Zudem müssen Steuergeräte mit sehr hohem Leistungsumsatz aufgrund der verhältnismäßig kleinen Spannung des Bordnetzes in nachteiliger Weise mit sehr hohen Stromstärken arbeiten. Derartige Steuergeräte sind daher teuer und fehleranfällig.

Des weiteren sind leistungsfähige Teilbordnetze mit Speichern und zugehörigen Ladeschaltungen bekannt. Dabei liegt der Speicher an der vollen Teilbordnetzspannung an. Der Speicher kann bei derartigen Lösungen nur teilweise entladen werden, da die Spannung sonst auf ein zu tiefes Niveau abfallen würde. Daher müssen entsprechende Speicher relativ groß gewählt werden.

Der vorliegenden Erfindung liegt die Aufgabe zugrunde ein Schaltungssystem der eingangs erwähnten Art zu schaffen, welches die Nachteile des Standes der Technik vermeidet, insbesondere zur Versorgung von elektrischen Hochleistungsverbrauchern geeignet ist und die Ausnutzung des Speichers verbessert.

Diese Aufgabe wird erfindungsgemäß durch die in Anspruch 1 genannten Merkmale gelöst.

Durch die erfindungsgemäßen Maßnahmen wird in vorteilhafter Weise bei einer Versorgung von elektrischen Hochleistungsverbrauchern nur ein relativ geringer Speicher benötigt. Der übliche Bordnetzgenerator lädt den Speicher, d.h. die Kraftfahrzeugbatterie des 12 Volt-Bordnetzes. Zusätzlich ist eine Ladeschaltung vorgesehen, mit deren Hilfe der in Reihe zu dem Bordnetz bzw. zu dem Speicher geschaltete zusätzliche elektrische Energiespeicher geladen wird. Die Ladeschaltung ist grundsätzlich für eine mittlere Leistung des wenigstens einen Verbrauchers ausgelegt, wodurch das Bordnetz nur wenig belastet wird. Jedoch kann auch ein mittelfristig erhöhter Energiebedarf abgedeckt werden. Dazu sollte immer eine entsprechende Restspannung in dem zusätzlichen Energiespeicher verbleiben. Der elektrische Verbraucher wird somit mit der Summe der beiden Spannungen aus Bordnetz und zusätzlichem Energiespeicher versorgt. Bei gleichem Verbrauchereingangsstrom ist eine höhere Leistungsentnahme möglich. Wenn der Verbraucher Leistung benötigt, so wird der Strom dafür beiden Speichern entnommen. Die vorhandene 12 Volt-Spannung des Bordnetzes wird demzufolge voll ausgenutzt. Die Spannung am Verbraucher kann minimal nur auf das Niveau des Bordnetzes absinken (Rückfallebene).

In einer erfindungsgemäßen Ausgestaltung kann die Ladeschaltung einen Spannungswandler aufweisen.

Vorteilhaft ist, wenn der zusätzliche elektrische Energiespeicher derart bemessen ist, dass er die Leistungsspitzen des Energiebedarfs des wenigstens einen Verbrauchers abdeckt. Der Energiespeicher wird immer auf eine Höchstgrenze geladen, um einen Spitzenbedarf der Verbraucher abdecken zu können.

Als zusätzlicher elektrischer Energiespeicher eignen sich hierzu, beispielsweise ein oder mehrere Kondensatoren (double layer capacity, DLC). Bei Verwendung eines Kondensators als zusätzlichen elektrischen Energiespeicher kann der gesamte Spannungshub des Energiespeichers durchlaufen werden, somit ist eine vollständige Energieentnahme möglich. Es verbleibt dann immer die Bordnetzspannung als Rückfallebene. Bei mehrstufigen bzw. kaskadierten Energiespeichern, insbesondere DLCs, werden wesentlich weniger Einzelelemente als bei einer Parallelschaltung zum Bordnetz benötigt. Dies deshalb, da bei der Parallelschaltung zum Bordnetz bereits einige in Reihe geschaltete Einzelelemente benötigt werden, um die Bordnetzspannung zu erreichen.

Darüber hinaus könnte als zusätzlicher elektrischer Energiespeicher auch eine zusätzliche Batterie, je nach Verbraucher beispielsweise mit einer 6 Volt-, 12 Volt- oder 24 Volt-Spannung vorgesehen sein.

Erfindungsgemäß kann ferner vorgesehen sein, dass eine parallel zu dem zusätzlichen elektrischen Energiespeicher geschaltete Überbrückungsschaltung vorgesehen ist.

Der Verbraucher kann durch die Überbrückungsschaltung im Fehlerfall bzw. bei einer Funktionsstörung oder einem Ausfall der Ladeschaltung und/oder des zusätzlichen Energiespeichers sowie bei leerem zusätzlichen Energiespeicher (beispielsweise aufgrund eines zu hohen Energieverbrauchs) auf einfache Weise über das Bordnetz weiter versorgt werden.

Die Überbrückungsschaltung kann dazu passiv, insbesondere als parallel zu dem zusätzlichen elektrischen Energiespeicher geschaltete Diode ausgebildet sein. Die Diode muss dazu derart geschaltet werden, dass der Strom bei leerem zusätzlichen elektrischen Energiespeicher von dem Speicher des Bordnetzes direkt an die Verbraucher geleitet wird.

Des weiteren kann die Überbrückungsschaltung auch aktiv ausgebildet sein. Dazu kann die aktive Überbrückungsschaltung einen elektronischen Schalter, beispielsweise einen MOS-Feldeffekttransistor oder einen elektromechanischen Schalter bzw. ein Relais aufweisen.

Die Ansteuerung der Überbrückungsschaltung kann durch die Ladeschaltung, durch den wenigstens einen elektrischen Verbraucher und/oder separat, insbesondere über eine Messgröße erfolgen.

Zur Ansteuerung der Überbrückungsschaltung kann die Spannung an dem zusätzlichen elektrischen Energiespeicher als Messgröße überwacht werden.

In einer erfindungsgemäßen Ausgestaltung kann die nominelle Spannung des zusätzlichen elektrischen Energiespeichers etwa 30% der Spannung des Bordnetzes betragen.

Vorteilhaft ist es, wenn die Überbrückungsschaltung in einfacher Weise in der Ladeschaltung integriert ist.

Weitere vorteilhafte Ausgestaltungen und Weiterbildungen der Erfindung ergeben sich aus den restlichen Unteransprüchen. Nachfolgend ist anhand der Zeichnung prinzipmäßig ein Ausführungsbeispiel der Erfindung beschrieben.

Es zeigt:
Fig. 1 eine schematische Darstellung eines elektrischen Servolenksystems mit Überlagerungsmitteln; und
Fig. 2 eine schematische Schaltungsskizze eines erfindungsgemäßen Schaltungssystems zur Erzeugung einer erhöhten Spannung.

Nachfolgend wird das erfindungsgemäße Schaltungssystem beispielhaft in einer vorteilhaften Anwendung zur Bereitstellung einer erhöhten Versorgungsspannung für ein elektrisches Servolenksystem mit Überlagerungsmitteln als Verbraucher eingesetzt. Ebenso kann das erfindungsgemäße Schaltungssystem auch zur Versorgung von weiteren Hochleistungsverbrauchern wie beispielsweise anderen elektrischen Servolenkungen, elektrischen Zusatzverdichtern, Startern bzw. Startergeneratoren und/oder elektromechanischen Wankstabilisierungen eingesetzt werden.

Eine Kraftfahrzeugbaureihe (nicht dargestellt) eines Kraftfahrzeugherstellers weist mehrere Kraftfahrzeugvarianten mit unterschiedlichen Ausstattungen, Karosserien und Motorentypen bzw. Motorisierungen auf. Die Kraftfahrzeugvarianten sind mit einem im wesentlichen einheitlichen elektrischen Servolenksystem ausgestattet. Bei einem Teil der Kraftfahrzeugbaureihe sind zusätzlich Überlagerungslenkungsmittel vorgesehen.

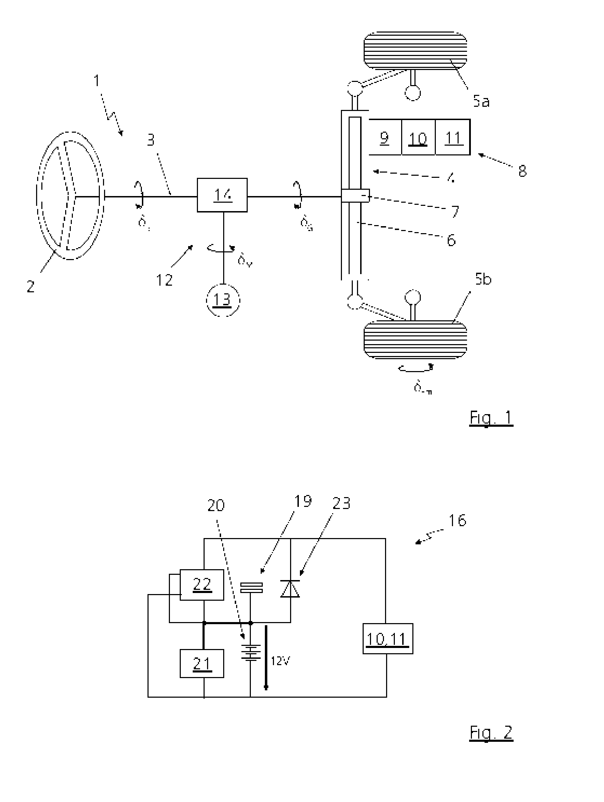

Wie aus Fig. 1 ersichtlich weist ein Servolenksystem 1 eine als Lenkrad ausgebildete Lenkhandhabe 2 auf. Das Lenkrad 2 ist über eine Gelenkwelle 3 mit einem Lenkgetriebe 4 verbunden. Das Lenkgetriebe 4 dient dazu, einen Drehwinkel der Gelenkwelle 3 in einen Lenkwinkel δ_{Fm} von lenkbaren Rädern 5a, 5b des Kraftfahrzeugs umzusetzen. Durch das Lenkrad 2 wird ein Lenkradwinkel δ_{S} als Maß für einen gewünschten Lenkwinkel δ_{Fm} der lenkbaren Räder 5a, 5b des Kraftfahrzeugs vorgegeben. Das Lenkgetriebe 4 weist eine Zahnstange 6 und ein Ritzel 7 auf, welches an die Gelenkwelle 3 angreift. Das elektrische Servolenksystem 1 weist des weiteren einen elektrischen Servoantrieb 8 mit einem Elektromotor 9 auf, welcher über ein nicht dargestelltes Getriebe bzw. Servogetriebe der Bereitstellung einer variablen Momentenunterstützung dient. Der Elektromotor 9 weist ein Leistungsteil 10 auf und wird über ein elektronisches Steuerteil bzw. Motorsteuergerät 11 gesteuert.

Das nicht dargestellte Kraftfahrzeug, welches das elektrische Servolenksystem 1 aufweist, gehört zu einem Teil der Kraftfahrzeugbaureihe mit zusätzlichen Überlagerungslenkungsmitteln 12. Das Servolenksystem 1 umfasst dazu die in der Lenksäule untergebrachten Überlagerungslenkungsmittel 12, die einen als Elektromotor ausgebildeten Stellantrieb 13 und ein von diesem angetriebenes Überlagerungsgetriebe 14 aufweisen. Das Überlagerungsgetriebe ist als Planetengetriebe 14 ausgebildet. Mit Hilfe des Stellantriebs 13 wird ein Zusatzwinkel δ_{M} generiert und durch das Überlagerungsgetriebe 14 mit dem Lenkradwinkel δ_{S} überlagert. Der Zusatzwinkel bzw. Motorwinkel δ_{M} wird zur Verbesserung der Fahrdynamik des Kraftfahrzeugs bzw. des Komforts erzeugt. Die Summe aus Lenkradwinkel δ_{S} und Zusatzwinkel δ_{M} ergibt einen Eingangswinkel des Lenkgetriebes 4 bzw. einen Ritzelwinkel δ_{G}. Der Stellantrieb 13 wird durch ein nicht dargestelltes elektronisches Steuergerät gesteuert.

Bei dem Servolenksystem 1 ist zur Erhöhung der Lenkleistung des elektrischen Servoantriebs 8 bzw. des Elektromotors 9, um die höheren, durch die Überlagerungsmittel bzw. Überlagerungslenkungsmittel 12 bedingten Lenkgeschwindigkeiten an der Zahnstange 6, auch bei eventuell gleichzeitig auftretenden höheren Lenkkräften, aufgrund des höheren Gewichts des gut ausgerüsteten Kraftfahrzeugs, erzeugen zu können, ein Betrieb des Leistungsteils 10 für den Elektromotor 9 bzw. des Elektromotors 9 mit einer gegenüber der Bordnetzspannung des Kraftfahrzeugs (12 V) erhöhten Versorgungsspannung vorgesehen. Die Versorgungsspannung ist gegenüber der Bordnetzspannung des Kraftfahrzeugs um nominell 30% erhöht. Jedoch sind in weiteren Ausführungsbeispielen auch andere Erhöhungen, insbesondere um 25% bis 35% denkbar. Unter Last bzw. im Betrieb sind hiervon abweichende Werte zu erwarten. Das Motormoment des Elektromotors 9 des elektrischen Servolenksystems 1 ist einheitlich bereits für die gut ausgerüsteten Kraftfahrzeugvarianten der Kraftfahrzeugbaureihe ausgelegt, so dass zur gewünschten Erhöhung der Lenkleistung lediglich die Drehzahl gesteigert werden muss. Dadurch können in vorteilhafter Weise die bestehenden im Wesentlichen einheitlichen Komponenten des elektrischen Servoantriebs 8 der Kraftfahrzeugbaureihe, insbesondere das elektronische Leistungsteil 10 für den Elektromotor 9, das Steuerteil 11, das nicht dargestellte Servogetriebe und der Elektromotor 9 unverändert beibehalten werden, was zu weitaus geringeren Herstellungskosten führt. Somit muss für die relativ geringe Stückzahl der hochwertigen Kraftfahrzeuge mit Überlagerungslenkung kein eigenes elektrisches Servolenksystem entwickelt bzw. hergestellt werden.

Das elektronische Steuerteil 11, das Leistungsteil 10 für den Elektromotor 9 und der Elektromotor 9 des elektrischen Servolenksystems 1 der Kraftfahrzeugbaureihe sind für einen Betrieb mit einer gegenüber der Bordnetzspannung des Kraftfahrzeugs erhöhten Versorgungsspannung ausgelegt.

Zusätzlich kann in weiteren Ausführungsbeispielen auch ein Betrieb des elektronischen Steuerteils 11 des elektrischen Servolenksystems 1 mit einer gegenüber der Bordnetzspannung des Kraftfahrzeugs erhöhten Versorgungsspannung vorgesehen sein.

In Fig. 2 ist ein erfindungsgemäßes Schaltungssystem 16 zur Erzeugung einer gegenüber einer Spannung des Bordnetzes des Kraftfahrzeugs erhöhten Versorgungsspannung aus dem Bordnetz des Kraftfahrzeugs für das Leistungsteil 10 des Elektromotors 9 (d.h. für den Elektromotor 9) und/oder das Steuerteil 11 als elektrische Verbraucher dargestellt. Ein zusätzlicher elektrischer Energiespeicher 19 ist zu dem vorhandenen 12 Volt-Bordnetz bzw. zur Kraftfahrzeugbatterie 20 als Speicher des Bordnetzes, welche über einen Bordnetzgenerator 21 geladen wird, in Reihe geschaltet. Der zusätzliche elektrische Energiespeicher 19 wird über eine Ladeschaltung 22 geladen. Die elektrischen Verbraucher 10, 11 werden somit mit der Summe der beiden Spannungen aus der Kraftfahrzeugbatterie 20 und dem zusätzlichen elektrischen Energiespeicher 19 versorgt, beispielsweise mit 16 Volt. Die Versorgungsspannung ist gegenüber der Bordnetzspannung des Kraftfahrzeugs um nominell 30% erhöht. Jedoch sind in weiteren Ausführungsbeispielen auch andere Erhöhungen, insbesondere um 25% bis 35% denkbar. Unter Last bzw. im Betrieb sind hiervon abweichende Werte zu erwarten. Bei gleichem Verbrauchereingangsstrom ist eine höhere Leistungsentnahme möglich. In vorteilhafter Weise kann dadurch der zusätzliche elektrische Energiespeicher 19 gegenüber einem Speicher für die gesamte erhöhte Spannung bezüglich des Bauraums wesentlich kleiner ausgelegt werden.

Der zusätzliche elektrische Energiespeicher 19 ist derart bemessen, dass er die Leistungsspitzen des Energiebedarfs des Leistungsteils 10 des Elektromotors 9 und des Steuerteils 11 abdeckt. Der Energiespeicher 19 wird immer auf eine Höchstgrenze geladen, um einen Spitzenbedarf der Verbraucher abdecken zu können.

Als Energiespeicher 19 sind im vorliegenden Ausführungsbeispiel mehrere Kondensatoren (double layer capacity, DLC) vorgesehen.

Des weiteren könnte auch als zusätzlicher elektrischer Energiespeicher 19 eine Batterie vorgesehen sein.

Wie aus Fig. 2 weiter ersichtlich, ist eine parallel zu dem zusätzlichen elektrischen Energiespeicher 19 geschaltete, als Diode 23 ausgebildete, passive Überbrückungsschaltung vorgesehen. Die Diode ist derart geschaltet, dass der Strom bei leerem zusätzlichen Energiespeicher 19 von der Kraftfahrzeugbatterie 20 des Bordnetzes direkt an die Verbraucher 10, 11 geleitet wird.

Das Leistungsteil 10 des Elektromotors 9 und das Steuerteil 11 können als Sicherheit über die Diode 23 im Fehlerfall bzw. bei einer Funktionsstörung oder einem Ausfall der Ladeschaltung 22 und/oder des zusätzlichen Energiespeichers 19 sowie bei einem zu hohen Energieverbrauch auf einfache Weise von dem Bordnetz weiter versorgt werden.

In weiteren nicht dargestellten Ausführungsbeispielen kann die Überbrückungsschaltung auch aktiv ausgebildet sein. Dazu kann die Überbrückungsschaltung einen elektronischen Schalter, beispielsweise einen MOS-Feldeffekttransistor oder einen elektromechanischen Schalter bzw. ein Relais aufweisen. Die Ansteuerung der Überbrückungsschaltung kann durch die Ladeschaltung, durch den wenigstens einen elektrischen Verbraucher und/oder separat erfolgen.

Des weiteren kann zur Ansteuerung der Überbrückungsschaltung die Spannung an dem zusätzlichen elektrischen Energiespeicher (19) als Messgröße überwacht werden.

Ebenso ist es in einem weiteren Ausführungsbeispiel denkbar, dass die Überbrückungsschaltung in der Ladeschaltung (22) integriert ist.

## Patentansprüche

1. Schaltungssystem (16) zur Erzeugung einer gegenüber einer Spannung eines Bordnetzes eines Kraftfahrzeugs erhöhten Versorgungsspannung aus dem Bordnetz für wenigstens einen elektrischen Verbraucher, wobei zu einem Speicher (20) des Bordnetzes ein zusätzlicher elektrischer Energiespeicher (19) in Reihe geschaltet ist, welcher über eine Ladeschaltung (22) aufladbar ist, wobei der wenigstens eine elektrische Verbraucher durch die Reihenschaltung aus dem Speicher (20) des Bordnetzes und dem zusätzlichen elektrischen Energiespeicher (19) versorgt wird.

2. Schaltungssystem nach Anspruch 1, **dadurch gekennzeichnet, dass** die Ladeschaltung (22) einen Spannungswandler aufweist.

3. Schaltungssystem nach Anspruch 1 oder 2, **dadurch gekennzeichnet, dass** der zusätzliche elektrische Energiespeicher (19) derart bemessen ist, dass er die Leistungsspitzen des Energiebedarfs des wenigstens einen Verbrauchers abdeckt.

4. Schaltungssystem nach Anspruch 1, 2 oder 3, **dadurch gekennzeichnet, dass** als zusätzlicher elektrischer Energiespeicher (19) wenigstens ein Kondensator, insbesondere ein DLC, vorgesehen ist.

5. Schaltungssystem nach Anspruch 1, 2 oder 3, **dadurch gekennzeichnet, dass** als zusätzlicher elektrischer Energiespeicher (19) eine Batterie vorgesehen ist.

6. Schaltungssystem nach einem der Ansprüche 1 bis 5, **dadurch gekennzeichnet, dass** eine parallel zu dem zusätzlichen elektrischen Energiespeicher (19) geschaltete Überbrückungsschaltung (23) vorgesehen ist.

7. Schaltungssystem nach Anspruch 6, **dadurch gekennzeichnet, dass** die Überbrückungsschaltung passiv, insbesondere als Diode (23) ausgebildet ist.

8. Schaltungssystem nach Anspruch 6, **dadurch gekennzeichnet, dass** die Überbrückungsschaltung aktiv ausgebildet ist.

9. Schaltungssystem nach Anspruch 8, **dadurch gekennzeichnet, dass** die aktive Überbrückungsschaltung einen elektronischen Schalter oder einen elektromechanischen Schalter aufweist.

10. Schaltungssystem nach Anspruch 8 oder 9, **dadurch gekennzeichnet, dass** die Ansteuerung der Überbrückungsschaltung durch die Ladeschaltung (22), durch den wenigstens einen elektrischen Verbraucher und/oder separat erfolgt.

11. Schaltungssystem nach einem der Ansprüche 6 bis 10, **dadurch gekennzeichnet, dass** zur Ansteuerung der Überbrückungsschaltung die Spannung an dem zusätzlichen elektrischen Energiespeicher (19) als Messgröße überwacht wird.

12. Schaltungssystem nach einem der Ansprüche 1 bis 11, **dadurch gekennzeichnet, dass** die nominelle Spannung des zusätzlichen elektrischen Energiespeichers (19) etwa 30% der Spannung des Bordnetzes beträgt.

13. Schaltungssystem nach einem der Ansprüche 6 bis 12, **dadurch gekennzeichnet, dass** die Überbrückungsschaltung in der Ladeschaltung (22) integriert ist.

14. Schaltungssystem nach einem der Ansprüche 1 bis 13, **dadurch gekennzeichnet, dass** der wenigstens eine elektrische Verbraucher ein elektrisches Servolenksystem (1) oder Teile davon umfasst.

15. Schaltungssystem nach Anspruch 14, **dadurch gekennzeichnet, dass** das elektrische Servolenksystem (1) Überlagerungslenkungsmittel (12) aufweist.
